# EUROPEAN PATENT APPLICATION

(11) **EP 2 778 742 A1**
(43) Date of publication of application: **17.09.2014**
(21) Application number: 14159125.5
(22) Date of filing: 12.03.2014
(51) Int. Cl.: G02B 26/00, G01J 3/10, G01J 3/26, G01J 3/51

(54) **Optical filter device, optical module, and electronic apparatus**

(30) Priority: 14.03.2013 JP 2013051371
(71) Applicant: Seiko Epson Corporation, Shinjuku-ku Tokyo (JP)
(72) Inventor: Matsushita, Tomonori, Nagano, 392-8502 (JP)
(74) Representative: HOFFMANN EITLE

(57) **Abstract**

An optical filter device includes a housing including a light passage hole capable of making light incident on the inner side, an aperture provided on the outer side of the housing and configured to limit the light made incident on the incident light passage hole, and an interference filter provided on the inner side of the housing and including a fixed reflection film and a movable reflection film opposed to the fixed reflection film. In plan view of the fixed reflection film and the movable reflection film viewed from a film thickness direction, an opening of the aperture, the light passage hole, and the fixed reflection film and the movable reflection film are provided to overlap one another. When the diameter of the fixed reflection film close to the light passage hole is represented as Φm, the bore of the light passage hole is represented as Φp, and the opening diameter of the aperture is represented as Φa, the optical filter device satisfies a relation Φa<Φm<Φp.

## Description

### BACKGROUND

### 1. Technical Field

The present invention relates to an optical filter device, an optical module, and an electronic apparatus.

### 2. Related Art

There has been known an interference filter in which reflection films are respectively arranged to be opposed to, via a predetermined gap, surfaces opposed to each other of a pair of substrates. There is also known an optical filter device in which the interference filter is housed in a housing (see, for example, JP-A-2008-70163 (Patent Literature 1)).

The optical filter device described in Patent Literature 1 includes a package (a housing) including a tabular pedestal and a cylindrical cap. In the housing, a peripheral edge portion of the pedestal and cylindrical one end of the cap are welded or bonded to be connected. A space for housing the interference filter is provided between the pedestal and the cap. A hole is provided on the upper surface of the cap opposed to the pedestal. A window section for allowing light to pass is provided in the hole.

In the optical filter device, a part of light made incident on the reflection films is reflected. When the light is made incident at an angle, the light reflected on the surfaces of the reflection films sometimes repeats reflection on the insides of the interference filter and the package to change to stray light and is emitted from the optical filter device without being spectrally split.

### SUMMARY

An advantage of some aspects of the invention is to provide an optical filter device, an optical module, and an electronic apparatus that can suppress occurrence of stray light.

An aspect of the invention is directed to an optical filter device including: a housing including an incident light passage hole capable of making light incident on the inner side; an aperture provided on the outer side of the housing and configured to limit the light made incident on the incident light passage hole; and an interference filter provided on the inner side of the housing and including a first reflection film and a second reflection film opposed to the first reflection film. In plan view of the first reflection film and the second reflection film viewed from a film thickness direction, an opening of the aperture, the incident light passage hole, and the first and second reflection films are provided to overlap one another. When the diameter of the first reflection film close to the incident light passage hole is represented as Φm, the bore of the incident light passage hole is represented as Φp, and the opening diameter of the aperture is represented as Φa, the optical filter device satisfies a relation Φa<Φm<Φp.

Incident light made incident on the first reflection film via the incident light passage hole is reflected on the surface of the first reflection film. When Φp<Φm, a part of the reflected light passes through the incident light passage hole and is emitted to the outside of the optical filter device. However, most of the remaining light is highly likely to hit the inner wall of the housing located around the incident light passage hole to be further reflected and change to stray light.

On the other hand, according to the aspect of the invention, since the optical filter device satisfies the relation Φa<Φm<Φp, most of the light reflected on the first reflection film passes through the incident light passage hole and is emitted to the outside of the optical filter device or hits the surface of the aperture located in the incident light passage hole in the plan view to be absorbed. Consequently, it is possible to suppress occurrence of stray light. Since it is unnecessary to provide a lens for highly accurately controlling an angle of incidence of light made incident on the first reflection film and apply reflection prevention treatment to the inner wall of the housing, it is possible to reduce costs.

In the optical filter device according to the aspect of the invention, it is preferable that center points in the plan view of the opening of the aperture, the incident light passage hole, the first reflection film, and the second reflection film are located on the same axis.

According to this configuration, most of light reflected on the first reflection film more surely passes through the incident light passage hole and is emitted to the outside of the optical filter device or hits the surface of the aperture located in the incident light passage hole in the plan view to be absorbed.

In the optical filter device according to the aspect of the invention, it is preferable that, when an angle of incidence of light made incident on the first reflection film from the incident light passage hole is represented as θ and a distance from the first reflection film to the aperture is represented as d, the optical filter device satisfies a relation (Φp-Φm)>2dtanθ.

According to this configuration, since all the light reflected on the first reflection film passes through the incident light passage hole, the light does not hit the inner wall of the housing. Therefore, it is possible to more surely suppress occurrence of stray light.

In the optical filter device according to the aspect of the invention, it is preferable that the optical filter device satisfies a relation (Φm-Φa)>2dtanθ.

According to this configuration, all the light made incident via the incident light passage hole is made incident on the first reflection film. Consequently, it is possible to suppress the light made incident via the incident light passage hole from repeating reflection in the insides of the interference filter and the housing to change to stray light without being made incident on the first reflection film.

In the optical filter device according to the aspect of the invention, it is preferable that a translucent substrate configured to cover the incident light passage hole is provided on the outer side of the housing, and the aperture is provided in the translucent substrate.

According to this configuration, the aperture can be formed of, for example, a film and can be reduced in thickness. Consequently, it is possible to reduce the optical filter device in thickness.

In the optical filter device according to the aspect of the invention, it is preferable that a reflection preventing film is provided on a surface of the translucent substrate opposed to the first reflection film.

According to this configuration, it is possible to suppress the light reflected on the first reflection film and passing through the incident light passage hole from being reflected on the surface of the translucent substrate to change to stray light.

In the optical filter device according to the aspect of the invention, it is preferable that light reflectance of a surface of the aperture opposed to the first reflection film is equal to or lower than 1%.

According to this configuration, it is possible to suppress the light reflected on the first reflection film and passing through the incident light passage hole from being reflected on the surface of the aperture to change to stray light.

In the optical filter device according to the aspect of the invention, it is preferable that the housing is located on the opposite side of the incident light passage hole with respect to the first reflection film and the second reflection film and includes an emitted light passage hole overlapping the first reflection film and the second reflection film in plan view, and when the bore of the emitted light passage hole is represented as Φo, the optical filter device satisfies a relation Φo<Φp.

According to this configuration, since Φo can be set small compared with the case of Φo≥Φp, it is possible to reduce stray light emitted from the optical filter device via the emitted light passage hole. When the emitted light passage hole is closed by a translucent substrate such as a glass substrate to seal the inside of the housing, since the bore of the emitted light passage hole can be reduced, it is possible to reduce the area of a sealing region and attain improvement of air tightness in the housing.

Another aspect of the invention is directed to an optical module including: a housing including an incident light passage hole capable of making light incident on the inner side; an aperture provided on the outer side of the housing and configured to limit the light made incident on the incident light passage hole; an interference filter provided on the inner side of the housing and including a first reflection film and a second reflection film opposed to the first reflection film; and a detecting section configured to detect light extracted by the interference filter. In plan view of the first reflection film and the second reflection film viewed from a film thickness direction, an opening of the aperture, the incident light passage hole, and the first and second reflection films are provided to overlap one another. When the diameter of the first reflection film close to the incident light passage hole is represented as Φm, the bore of the incident light passage hole is represented as Φp, and the opening diameter of the aperture is represented as Φa, the optical filter device satisfies a relation Φa<Φm<Φp.

According to the aspect of the invention, as in the optical filter device, it is possible to suppress occurrence of stray light. Consequently, it is possible to accurately detect a light amount of light having a desired specific wavelength by detecting, with the detecting section, light extracted by the interference filter.

Still another aspect of the invention is directed to an electronic apparatus including: a housing including an incident light passage hole capable of making light incident on the inner side; an aperture provided on the outer side of the housing and configured to limit the light made incident on the incident light passage hole; an interference filter provided on the inner side of the housing and including a first reflection film and a second reflection film opposed to the first reflection film; and a control section configured to control the interference filter. In plan view of the first reflection film and the second reflection film viewed from a film thickness direction, an opening of the aperture, the incident light passage hole, and the first and second reflection films are provided to overlap one another. When the diameter of the first reflection film close to the incident light passage hole is represented as Φm, the bore of the incident light passage hole is represented as Φp, and the opening diameter of the aperture is represented as Φa, the optical filter device satisfies a relation Φa<Φm<Φp.

According to the aspect of the invention, as in the optical filter device, it is possible to suppress occurrence of stray light. Consequently, it is possible to accurately extract, with the interference filter, light having a desired specific wavelength. It is possible to carry out highly accurate electronic processing (e.g., chromaticity measurement and component analysis) using the extracted light.

### BRIEF DESCRIPTION OF THE DRAWINGS

The invention will be described with reference to the accompanying drawings, wherein like numbers reference like elements.
Fig. 1 is a perspective view showing the schematic configuration of an optical filter device in a first embodiment of the invention.
Fig. 2 is a sectional view showing the schematic configuration of the optical filter device in the first embodiment.
Fig. 3 is a plan view showing the schematic configuration of an interference filter housed in the optical filter device in the first embodiment.
Fig. 4 is a sectional view showing the schematic configuration of the interference filter in the first embodiment.
Fig. 5 is a partial sectional view showing the optical filter device in the first embodiment.
Fig. 6 is a partial sectional view showing an optical filter device in a comparative example.
Fig. 7 is a block diagram showing the schematic configuration of a colorimetric apparatus in a second embodiment.
Fig. 8 is a partial sectional view showing an optical filter device in a modification.
Fig. 9 is a schematic diagram showing a gas detecting apparatus including an optical filter device according to the invention.
Fig. 10 is a block diagram showing the configuration of a control system of the gas detecting apparatus shown in Fig. 9.
Fig. 11 is a diagram showing the schematic configuration of a food analyzing apparatus including the optical filter device according to the invention.
Fig. 12 is a schematic diagram showing the schematic configuration of a spectroscopic camera including the optical filter device according to the invention.

### DESCRIPTION OF EXEMPLARY EMBODIMENTS

### First Embodiment

A first embodiment of the invention is explained below with reference to the drawings.

### 1. Configuration of an optical filter device

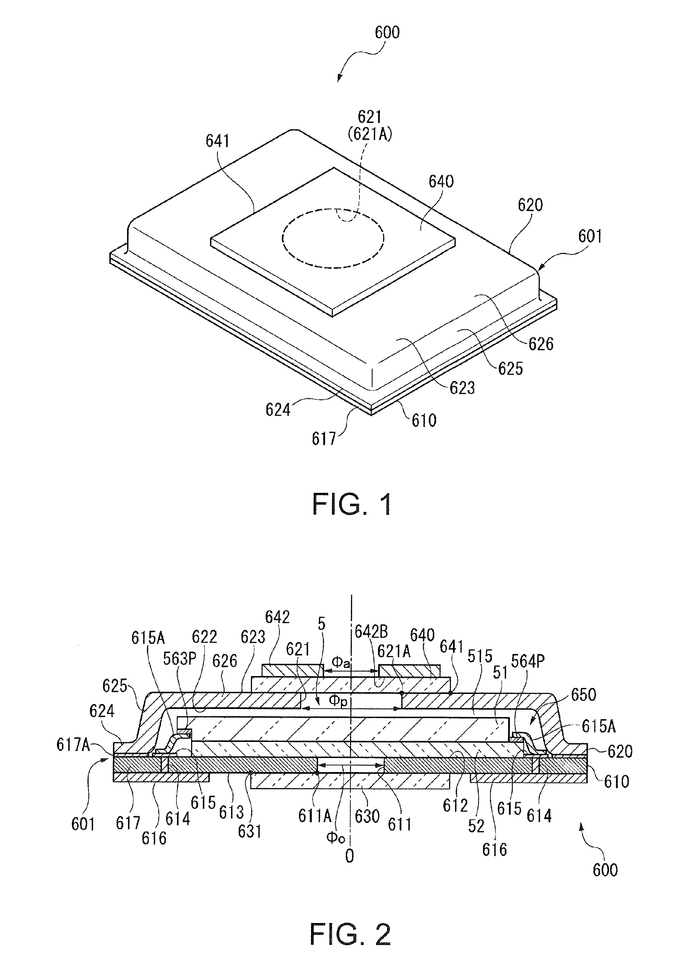

Fig. 1 is a perspective view showing the schematic configuration of an optical filter device 600 in the first embodiment of the invention. Fig. 2 is a sectional view of the optical filter device 600.

The optical filter device 600 is a device that extracts light having a predetermined target wavelength from incident inspection target light and emits the light. The optical filter device 600 includes a housing 601 and a variable wavelength interference filter 5 (see Fig. 2) housed on the inside of the housing 601. The optical filter device 600 can be incorporated in an optical module such as a colorimetric sensor and an electronic apparatus such as a colorimetric apparatus or a gas analyzing apparatus. The configurations of the optical module and the electronic apparatus including the optical filter device 600 are explained below in a second embodiment.

### 2. Configuration of a variable wavelength interference filter

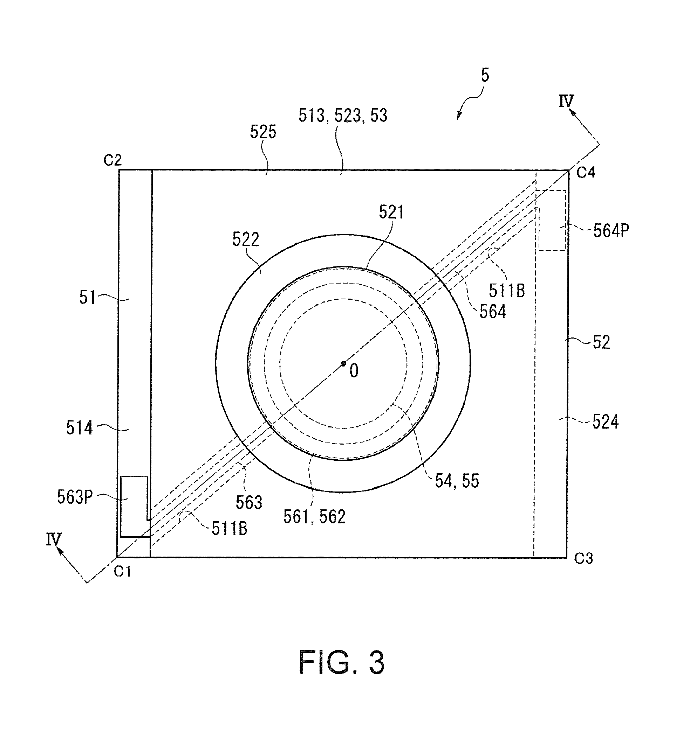

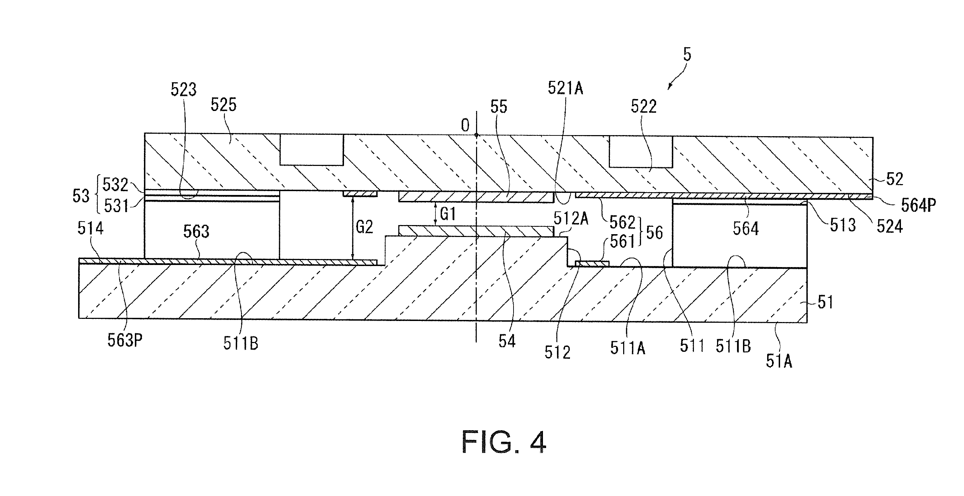

A variable wavelength interference filter 5 configures an interference filter according to the invention. Fig. 3 is a plan view showing the schematic configuration of the variable wavelength interference filter 5 provided in the optical filter device 600. Fig. 4 is a sectional view showing the schematic configuration of the variable wavelength interference filter 5 taken along line IV-IV in Fig. 3.

As shown in Fig. 3, the variable wavelength interference filter 5 is, for example, a rectangular tabular optical member. The variable wavelength interference filter 5 includes a fixed substrate 51, which is a first substrate according to the invention, and a movable substrate 52, which is a second substrate according to the invention. Each of the fixed substrate 51 and the movable substrate 52 is formed by any one of various kinds of glass such as soda glass, crystalline glass, quartz glass, lead glass, potassium glass, borosilicate glass, and alkali-free glass or crystal. A first joining section 513 of the fixed substrate 51 and a second joining section 523 of the movable substrate 52 are joined by joining films 53 (a first joining film 531 and a second joining film 532) formed by, for example, a plasma polymerized film containing siloxane as a main component, whereby the fixed substrate 51 and the movable substrate 52 are integrally configured.

In the following explanation, plan view viewed from the substrate thickness direction of the fixed substrate 51 or the movable substrate 52, that is, plan view of the variable wavelength interference filter 5 viewed from a laminating direction of the fixed substrate 51, the joining films 53, and the movable substrate 52 is referred to as filter plan view.

On the fixed substrate 51, a fixed reflection film 54, which is a first reflection film according to the invention, is provided. On the movable substrate 52, a movable reflection film 55, which is a second reflection film according to the invention, is provided. The fixed reflection film 54 and the movable reflection film 55 are arranged to be opposed to each other via an inter-reflection film gap G1. In the variable wavelength interference filter 5, an electrostatic actuator 56 used to adjust a distance (a dimension) of the inter-reflection film gap G1 is provided. The electrostatic actuator 56 includes a fixed electrode 561 provided on the fixed substrate 51 and a movable electrode 562 provided on the movable substrate 52. The fixed electrode 561 and the movable electrode 562 are opposed to each other via an inter-electrode gap G2 (G2>G1). The electrodes 561 and 562 may be directly provided on the substrate surfaces of the fixed substrate 51 and the movable substrate 52 or may be provided via another film member.

In an example explained in this embodiment, the inter-reflection film gap G1 is formed smaller than the inter-electrode gap G2. However, for example, depending on a wavelength region transmitted by the variable wavelength interference filter 5, the inter-reflection film gap G1 may be formed larger than the inter-electrode gap G2.

In the filter plan view, one side (e.g., a side between a vertex C1 and a vertex C2 in Fig. 3) of the fixed substrate 51 projects further to the outer side than the movable substrate 52. In this projecting portion, a surface exposed when the variable wavelength interference filter 5 is viewed from the movable substrate 52 side configures a first electric surface 514.

In the filter plan view, one side (a side between a vertex C3 and a vertex C4) opposed to the first electric surface 514 among the sides of the movable substrate 52 projects further to the outer side than the fixed substrate 51. In this projecting portion, a surface exposed when the variable wavelength interference filter 5 is viewed from the fixed substrate 51 side configures a second electric surface 524.

### 2-1. Configuration of the fixed substrate

The fixed substrate 51 is formed by machining a glass base material formed at thickness of, for example, 500 µm. Specifically, as shown in Fig. 4, on the fixed substrate 51, an electrode arrangement groove 511 and a reflection-film setting section 512 are formed by etching. The fixed substrate 51 is formed larger than the movable substrate 52 in a thickness dimension. The fixed substrate 51 is not bent by electrostatic attraction applied when a voltage is applied between the fixed electrode 561 and the movable electrode 562 and internal stress of the fixed electrode 561.

In the filter plan view, the electrode arrangement groove 511 is annularly formed centering on a center point O of the variable wavelength interference filter 5. In the plan view, the reflection-film setting section 512 is formed to project to the movable substrate 52 side from the center of the electrode arrangement groove 511. A groove bottom surface of the electrode arrangement groove 511 is an electrode setting surface 511A on which the fixed electrode 561 is arranged. A projection distal end face of the reflection-film setting section 512 is a reflection-film setting surface 512A.

On the fixed substrate 51, an electrode extraction groove 511B extending from the electrode arrangement groove 511 toward the first electric surface 514 and the second electric surface 524 is provided.

The fixed electrode 561 is provided on the electrode setting surface 511A of the electrode arrangement groove 511. The fixed electrode 561 is provided in a region opposed to the movable electrode 562 of a movable section 521 explained below on the electrode setting surface 511A. An insulation film for securing insulation between the fixed electrode 561 and the movable electrode 562 may be laminated on the fixed electrode 561.

On the fixed substrate 51, a fixed extraction electrode 563 extending from the outer circumferential edge of the fixed electrode 561 to the first electric surface 514 through the electrode extraction groove 511B is provided. An extension distal end (a portion located at the vertex C2 of the fixed substrate 51) of the fixed extraction electrode 563 configures a fixed electrode pad 563P on the first electric surface 514.

In this embodiment, one fixed electrode 561 is provided on the electrode setting surface 511A. However, for example, two electrode forming concentric circles centering on the plane center point O may be provided (a double electrode configuration).

As explained above, the reflection-film setting section 512 is formed coaxially with the electrode arrangement groove 511 and in a substantially columnar shape having a diameter dimension smaller than the electrode arrangement groove 511. The reflection-film setting section 512 includes the reflection-film setting surface 512A opposed to the movable substrate 52 of the reflection-film setting section 512.

As shown in Fig. 4, the fixed reflection film 54 is set in the reflection-film setting section 512. As the fixed reflection film 54, for example, a metal film of Ag or the like or an alloy film of an Ag alloy or the like can be used. For example, a dielectric multilayer film including TiO₂ as a high refraction layer and including SiO₂ as a low refraction layer may be used. Further, a reflection film obtained by laminating the metal film (or the alloy film) on the dielectric multilayer film, a reflection film obtained by laminating the dielectric multilayer film on the metal film (or the alloy film), a reflection film obtained by laminating an single refraction layer (TiO₂, SiO₂, etc.) and the metal film (or the alloy film), or the like may be used.

A reflection preventing film may be formed in a position corresponding to the fixed reflection film 54 on a light incident surface 51A (a surface on which the fixed reflection film 54 is not provided) of the fixed substrate 51. The reflection preventing film can be formed by, for example, alternately laminating a low refractive index film and a high refractive index film. The reflectance of visible light on the surface of the fixed substrate 51 is reduced to increase transmittance.

On the surface of the fixed substrate 51 opposed to the movable substrate 52, a surface on which the electrode arrangement groove 511, the reflection-film setting section 512, and the electrode extraction groove 511B are not formed by etching configures the first joining section 513. The first joining film 531 is provided in the first joining section 513. The first joining film 531 is joined to the second joining film 532 provided on the movable substrate 52, whereby the fixed substrate 51 and the movable substrate 52 are joined as explained above.

### 2-2. Configuration of the movable substrate

The movable substrate 52 is formed by machining a glass base material formed at thickness of, for example, 200 µm.

Specifically, the movable substrate 52 includes a circular movable section 521 centering on the plane center point O, a holding section 522 provided on the outer side of the movable section 521 and configured to hold the movable section 521, and a substrate outer peripheral section 525 provided on the outer side of the holding section 522 in the filter plan view shown in Fig. 3.

The movable section 521 is formed larger than the holding section 522 in a thickness dimension. For example, in this embodiment, the movable section 521 is formed in a dimension same as the thickness dimension of the movable substrate 52. In the filter plan view, the movable section 521 is formed in a diameter dimension larger than at least the diameter dimension of the outer circumferential edge of the reflection-film setting surface 512A. The movable electrode 562 and the movable reflection film 55 are provided in the movable section 521.

As in the fixed substrate 51, a reflection preventing film may be formed on the surface of the movable section 521 on the opposite side of the fixed substrate 51. The reflection preventing film can be formed by alternately laminating a low refractive index film and a high refractive index film. The reflection preventing film can reduce the reflectance of visible light on the surface of the movable substrate 52 and increase the transmittance of the visible light.

The movable electrode 562 is opposed to the fixed electrode 561 via the inter-electrode gap G2 and formed in an annular shape same as the shape of the fixed electrode 561. The movable substrate 52 includes a movable extraction electrode 564 extending from the outer circumferential edge of the movable electrode 562 toward the second electric surface 524. An extension distal end (a portion located at the vertex C4 of the movable substrate 52) of the movable extraction electrode 564 configures a movable electrode pad 564P on the second electric surface 524.

The movable reflection film 55 is provided to be opposed to the fixed reflection film 54 via the inter-reflection film gap G1 in the center of a movable surface 521A of the movable section 521. As the movable reflection film 55, a reflection film having a configuration same as the fixed reflection film 54 is used.

The holding section 522 is a diaphragm surrounding the movable section 521 and is formed smaller than the movable section 521 in a thickness dimension.

The holding section 522 more easily bends than the movable section 521. The movable section 521 can be displaced to the fixed substrate 51 side by slight electrostatic attraction. When the movable section 521 is displaced, since the movable section 521 is larger than the holding section 522 in the thickness dimension and has larger rigidity, even if the holding section 522 is pulled to the fixed substrate 51 side by electrostatic attraction, a shape change of the movable section 521 does not occur. Therefore, a bend of the movable reflection film 55 provided in the movable section 521 does not occur either. It is possible to always maintain the fixed reflection film 54 and the movable reflection film 55 in a parallel state.

In this embodiment, the holding section 522 having a diaphragm shape is illustrated. However, the holding section 522 is not limited to this. For example, beam-like holding sections arranged at an equal angle interval centering on the plane center point O may be provided.

As explained above, the substrate outer peripheral section 525 is provided on the outer side of the holding section 522 in the filter plan view. The surface of the substrate outer peripheral section 525 opposed to the fixed substrate 51 includes the second joining section 523 opposed to the first joining section 513. The second joining film 532 is provided in the second joining section 523. As explained above, the second joining film 532 is joined to the first joining film 531, whereby the fixed substrate 51 and the movable substrate 52 are joined.

### 3. Configuration of the housing

Referring back to Figs. 1 and 2, the housing 601 includes a base substrate 610, a lid 620, a base-side glass substrate 630 (a translucent substrate), and a lid-side glass substrate 640 (a translucent substrate).

The base substrate 610 is formed by, for example, a single layer ceramic substrate. On the base substrate 610, the movable substrate 52 of the variable wavelength interference filter 5 is set. The movable substrate 52 may be arranged on the base substrate 610 via, for example, an adhesive layer or may be arranged by, for example, being fit in another fixing member or the like.

On the base substrate 610, a light passage hole 611 (an emitted light passage hole) is opened in a region opposed to the reflection films (the fixed reflection film 54 and the movable reflection film 55) of the variable wavelength interference filter 5.

On a base inner side surface 612 (a lid opposed surface) of the base substrate 610 opposed to the lid 620, inner side terminal sections 615 connected to electrode pads 563P and 564P on the first electric surface 514 and the second electric surface 524 of the variable wavelength interference filter 5 are provided. For the connection of the electrode pads 563P and 564P and the inner side terminal sections 615, for example, FPCs (Flexible Printed Circuits) 615A can be used. The electrode pads 563P and 564P and the inner side terminal sections 615 are joined by, for example, an Ag paste, an ACF (Anisotropic Conductive Film), or an ACP (Anisotropic Conductive Paste). It is preferable to use the Ag paste with less degassing (gas emission) in order to maintain an internal space 650 in a vacuum state. The connection is not limited to the connection by the FPCs 615A. Wire connection by, for example, wire bonding may be carried out.

In the base substrate 610, through-holes 614 are formed to correspond to positions where the inner side terminal sections 615 are provided. The inner side terminal sections 615 are connected to outer side terminal sections 616 provided on a base outer side surface 613 on the opposite side of the base inner side surface 612 of the base substrate 610. A metal member (e.g., an Ag paste) for connecting the inner side terminal sections 615 and the outer side terminal sections 616 is filled in the through holes 614. Airtightness of the internal space 650 of the housing 601 is maintained.

In the outer peripheral section of the base substrate 610, a base joining section 617 joined to the lid 620 is provided.

The lid 620 includes, as shown in Figs. 1 and 2, a lid joining section 624 joined to the base joining section 617 of the base substrate 610, a sidewall section 625 continuing from the lid joining section 624 and standing in a direction away from the base substrate 610, and a top surface section 626 continuing from the sidewall section 625 and configured to cover the fixed substrate 51 side of the variable wavelength interference filter 5. The lid 620 can be formed by an alloy such as Kovar or metal.

The lid joining section 624 and the base joining section 617 of the base substrate 610 are joined, whereby the lid 620 is closely attached and joined to the base substrate 610.

Examples of a method for the joining include, besides laser welding, soldering with silver solder, sealing with a eutectic alloy layer, welding with low-melting point glass, glass adhesion, glass frit joining, and bonding with epoxy resin. These joining methods can be selected as appropriate according to materials of the base substrate 610 and the lid 620, a joining environment, and the like.

In this embodiment, a pattern for joining 617A formed by Ni, Au, or the like is formed on the base joining section 617 of the base substrate 610. A high power laser (e.g., a YAG laser) is irradiated on the pattern for joining 617A and the lid joining section 624 to join the pattern for joining 617A and the lid joining section 624 by laser.

The top surface section 626 of the lid 620 is parallel to the base substrate 610. In the top surface section 626, a light passage hole 621 (an incident light passage hole) is opened in a region opposed to the reflection films 54 and 55 of the variable wavelength interference filter 5.

A bore Φp of the light passage hole 621 is larger than a bore Φo of the light passage hole 611 formed in the base substrate 610 (Φp>Φo). That is, in the filter plan view, an outer circumferential edge 621A of the light passage hole 621 is located further on the outer side than an outer circumferential edge 611 A of the light passage hole 611.

In this embodiment, light is made incident from the light passage hole 621 of the lid 620. Light extracted by the variable wavelength interference filter 5 is emitted from the light passage hole 611 of the base substrate 610.

The base-side glass substrate 630 is a glass substrate joined to the base outer side surface 613 side of the base substrate 610 to cover the light passage hole 611. The base-side glass substrate 630 is formed in a size larger than the light passage hole 611 and arranged such that the plane center point O of the base-side glass substrate 630 coincides with the plane center point O of the light passage hole 611. The plane center point O coincides with the plane center point O of the variable wavelength interference filter 5 and coincides with the plane center point O of annular inner circumferential edges of the fixed reflection film 54 and the movable reflection film 55. In the base-side glass substrate 630, in the filter plan view, a region further on the outer side than the outer circumferential edge 611 A of the light passage hole 611 (a region from the outer circumferential edge 611A to a substrate end edge 631 of the base-side glass substrate 630) is joined to the base substrate 610.

Similarly, the lid-side glass substrate 640 is a glass substrate joined to a lid outer side surface 623 side on the opposite side of a lid inner side surface 622 opposed to the base substrate 610 of the lid 620 to cover the light passage hole 621. The lid-side glass substrate 640 is formed in a size larger than the light passage hole 621 and arranged such that the plane center point O of the lid-side glass substrate 640 coincides with the plane center point O of the light passage hole 621. In the lid-side glass substrate 640, in the filter plan view, a region further on the outer side than the outer circumferential edge 621A of the light passage hole 621 (a region from the outer circumferential edge 621A to a substrate end edge 641 of the lid-side glass substrate 640) is joined to the lid 620.

As the joining of the base substrate 610 and the base-side glass substrate 630 and the joining of the lid 620 and the lid-side glass substrate 640, for example, glass frit joining with glass frit, which is a chip of glass obtained by dissolving a glass material at high temperature and rapidly cooling the glass material, can be used. In the glass frit joining, a gap is not formed in a joining portion. Since the glass frit with less degassing (gas emission) is used, the internal space 650 can be maintained in the vacuum state. The joining is not limited to the glass frit joining. Joining by welding or glass sealing with low-melting point glass may be performed. Although not suitable for maintaining the vacuum state of the internal space 650, for example, only for the purpose of suppressing intrusion of foreign matters into the internal space 650, bonding by epoxy resin or the like may be performed.

On a surface (a light incident surface) on the opposite side of the surface of the lid-side glass substrate 640 opposed to the lid 620, a non-translucent member 642 formed by, for example, a low-reflection chrome light blocking film is provided. The non-translucent member 642 is formed in an annular shape and preferably in a ring shape. An annular inner circumferential diameter (an opening diameter) Φa of the non-translucent member 642 is set to an effective diameter for causing the fixed reflection film 54 and the movable reflection film 55 to cause light interference. Consequently, the non-translucent member 642 functions as an aperture configured to limit (narrow) incident light made incident on the optical filter device 600. The non-translucent member 642 has a light absorbing characteristic. The light reflectance of a surface 642B opposed to the lid-side glass substrate 640 is equal to or lower than 1%. The plane center point O of an opening of the non-translucent member 642 coincides with the plane center point O of the light passage hole 621 and coincides with the plane center point O of the annular inner circumferential edges of the fixed reflection film 54 and the movable reflection film 55.

The bore Φo of the light passage hole 611 may be smaller than Φa. However, since a transmitted light amount decreases in this case, the bore Φo of the light passage hole 611 is preferably equal to or larger than Φa.

As explained above, in the optical filter device 600 in this embodiment, the internal space 650 of the housing 601 is maintained airtight by the joining of the base substrate 610 and the lid 620, the joining of the base substrate 610 and the base-side glass substrate 630, and the joining of the lid 620 and the lid-side glass substrate 640. In this embodiment, the internal space 650 is maintained in the vacuum state.

Since the internal space 650 is maintained in the vacuum state, when the movable section 521 of the variable wavelength interference filter 5 is moved, air resistance does not occur and responsiveness can be improved.

### Dimensions of opening of the light passage hole 621 and the non-translucent member 642

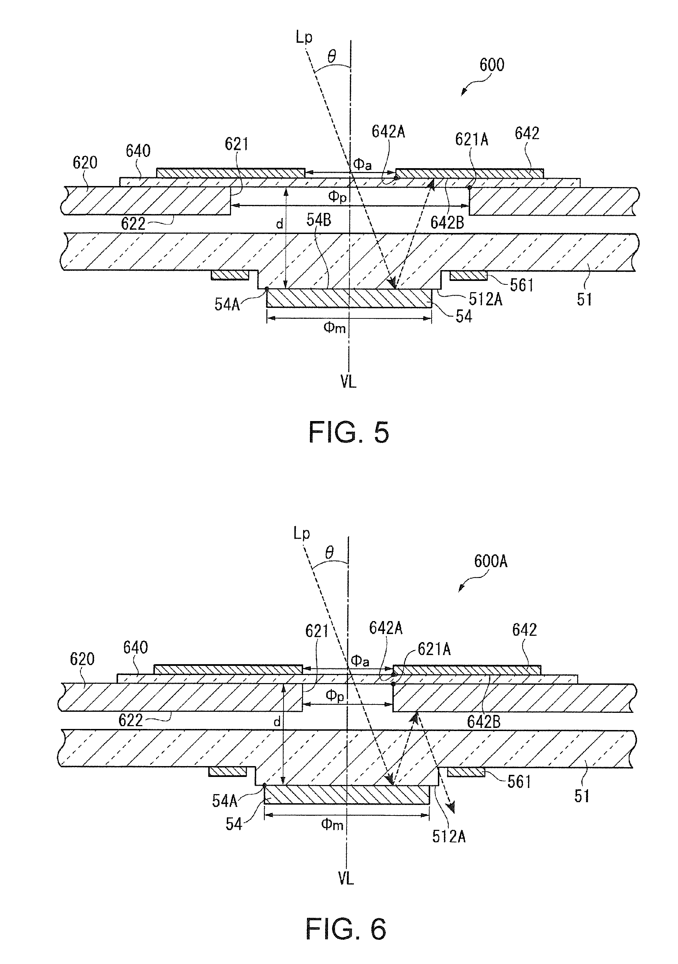

Fig. 5 is a partial sectional view showing the optical filter device 600.

As shown in Fig. 5, when the diameter of the fixed reflection film 54 is represented as Φm, the optical filter device 600 satisfies a relation Φa (the opening diameter of the non-translucent member 642) <Φm<Φp (the bore of the light passage hole 621). That is, in the filter plan view, an outer circumferential edge 54A of the fixed reflection film 54 is located further on the outer side than an outer circumferential edge 642A of the opening of the non-translucent member 642. The outer circumferential edge 621 A of the light passage hole 621 is located further on the outer side than the outer circumferential edge 54A of the fixed reflection film 54.

A course of light made incident on the fixed reflection film 54 via the light passage hole 621 is explained in comparison with a comparative example shown in Fig. 6. An optical filter device 600A of the comparative example shown in Fig. 6 satisfies a relation Φp<Φm (=Φa).

As shown in Figs. 5 and 6, incident light Lp made incident on the fixed reflection film 54 at an angle of incidence θ via the light passage hole 621 is reflected on a surface 54B (a surface opposed to the reflection-film setting surface 512A) of the fixed reflection film 54. The angle of incidence θ is an angle formed between the incident light Lp and an imaginary straight line VL perpendicular to the fixed reflection film 54.

Since the optical filter device 600A of the comparative example shown in Fig. 6 satisfies the relation Φp<Φm (=Φa), a part of light reflected on the surface 54B of the fixed reflection film 54 is emitted to the outside of the optical filter device 600A via the light passage hole 621. However, most of the remaining light hits the lid inner side surface 622 located around the light passage hole 621 to be further reflected.

On the other hand, since the optical filter device 600 in this embodiment satisfies the relation Φa<Φm<Φp, as shown in Fig. 5, most of light reflected on the surface 54B of the fixed reflection film 54 passes through the light passage hole 621 and is emitted to the outside of the optical filter device 600 or hits the surface 642B of the non-translucent member 642 located in the light passage hole 621 in the filter plan view to be absorbed.

More specifically, as shown in Fig. 5, when a distance from the fixed reflection film 54 to the surface 642B of the non-translucent member 642 is represented as d, the optical filter device 600 satisfies a relation (Φp-Φm)/2dtanθ.

According to this condition, all light reflected on the fixed reflection film 54 passes through the light passage hole 621. Therefore, the light does not hit the lid inner side surface 622.

Further, the optical filter device 600 satisfies a relation (Φm-Φa)>2dtanθ. According to this condition, all the incident light Lp is made incident on the fixed reflection film 54.

### Action and effect of this embodiment

When the opening diameter of the non-translucent member 642 is represented as Φa, the diameter of the fixed reflection film 54 is represented as Φm, and the bore of the light passage hole 621 is represented as Φp, the optical filter device 600 in this embodiment satisfies the relation Φa<Φm<Φp. Therefore, most of light reflected on the fixed reflection film 54 passes through the light passage hole 621 and is emitted to the outside of the optical filter device 600 or hits the surface 642B of the non-translucent member 642 located in the light passage hole 621 in the filter plan view to be absorbed. Consequently, it is possible to suppress occurrence of stray light. Since it is unnecessary to apply reflection prevention treatment to the inner wall of the housing 601, it is possible to reduce costs. As a lens for controlling the angle of incidence θ of the incident light Lp, a lens capable of guiding the incident light Lp at the angle of incidence θ satisfying a condition (Φp-Φm)>2dtanθ and (Φm-Φa)>2dtanθ only has to be used. Therefore, it is possible to make it unnecessary to provide a high-precision lens for reducing the angle of incidence θ and it is possible to reduce costs.

When an angle of incidence of the incident light Lp is represented as θ and a distance from the fixed reflection film 54 to the non-translucent member 642 is represented as d, the optical filter device 600 satisfies a relation (Φp-Φm)>2dtanθ. Therefore, since all light reflected on the fixed reflection film 54 passes through the light passage hole 621, the light does not hit the inner wall of the housing 601. Therefore, it is possible to more surely suppress occurrence of stray light.

The optical filter device 600 satisfies the relation (Φm-Φa)>2dtanθ. Therefore, all the incident light Lp is made incident on the fixed reflection film 54. Consequently, it is possible to prevent the incident light Lp from repeating reflection on the insides of the variable wavelength interference filter 5 and the housing 601 to change to stray light without being made incident on the fixed reflection film 54.

In the optical filter device 600, the lid-side glass substrate 640 configured to cover the light passage hole 621 is provided on the outer side of the housing 601. The non-translucent member 642 is provided on the lid-side glass substrate 640. Therefore, the non-translucent member 642 can be formed of, for example, a film and can be formed thin. Consequently, it is possible to reduce the optical filter device 600 in thickness.

In the optical filter device 600, the light reflectance of the surface 642B of the non-translucent member 642 is equal to or lower than 1%. Therefore, it is possible to suppress light reflected on the fixed reflection film 54 to pass through the light passage hole 621 from being reflected on the surface 642B of the non-translucent member 642 to change to stray light.

When the bore of the light passage hole 611 is represented as Φo, the optical filter device 600 satisfies a relation Φo<Φp. Therefore, since Φo can be set small compared with the case of Φo≥Φp it is possible to reduce stray light emitted from the optical filter device 600 via the light passage hole 611. Further, since the area of a sealing region by the lid-side glass substrate 640 can also be reduced, it is possible to attain improvement of airtightness in the housing 601.

In addition, the optical filter device 600 satisfies a relation Φo≥Φa. Therefore, incident light orthogonal to the fixed reflection film 54 is emitted from the light passage hole 611 without a light amount being reduced. Consequently, it is possible to reduce stray light without reducing a transmitted light amount of the optical filter device 600.

### Second Embodiment

A second embodiment of the invention is explained with reference to the drawings.

In the second embodiment, a colorimetric sensor 3, which is an optical module incorporating the optical filter device 600 in the first embodiment, and a colorimetric apparatus 1, which is an electronic apparatus incorporating the optical filter device 600, are explained.

### 1. Schematic configuration of the colorimetric apparatus

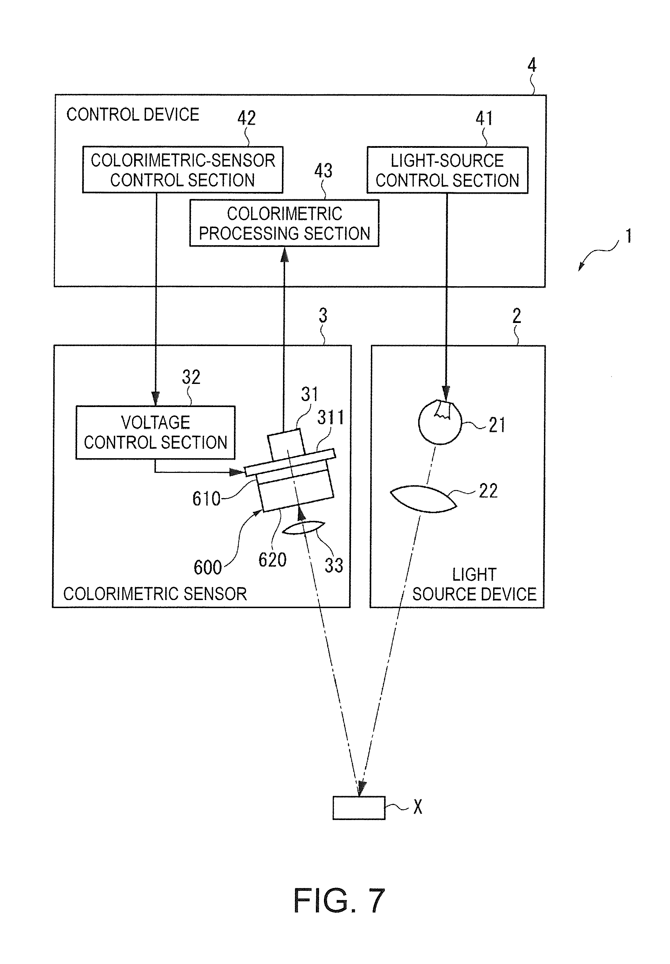

Fig. 7 is a block diagram showing the schematic configuration of the colorimetric apparatus 1 in the first embodiment.

The colorimetric apparatus 1 is an electronic apparatus according to the invention. The colorimetric apparatus 1 includes, as shown in Fig. 7, a light source device 2 configured to emit light to an inspection target X, the colorimetric sensor 3, and a control device 4 configured to control the overall operation of the colorimetric apparatus 1. The colorimetric apparatus 1 is an apparatus that reflects, on the inspection target X, light emitted from the light source device 2, receives the reflected inspection target light with the colorimetric sensor 3, and analyzes and measures the chromaticity of the inspection target light, that is, a color of the inspection target X on the basis of a detection signal output from the colorimetric sensor 3.

### 2. Configuration of the light source device

The light source device 2 includes a light source 21 and a plurality of lenses 22 (only one lens 22 is shown in Fig. 7). The light source device 2 emits white light to the inspection target X. The plurality of lenses 22 may include a collimator lens. In this case, the light source device 2 changes the white light emitted from the light source 21 to parallel light with the collimator lens and emits the parallel light to the inspection target X from a not-shown projection lens. In this embodiment, the colorimetric apparatus 1 including the light source device 2 is illustrated. However, for example, when the inspection target X is a light emitting member such as a liquid crystal panel, the colorimetric apparatus 1 does not have to include the light source device 2.

### 3. Configuration of the colorimetric sensor

The colorimetric sensor 3 is an optical module according to the invention and includes the optical filter device 600 in the first embodiment. The colorimetric sensor 3 includes, as shown in Fig. 7, the optical filter device 600, a detecting section 31 configured to receive light transmitted through the variable wavelength interference filter 5 of the optical filter device 600, and a voltage control section 32 configured to vary a wavelength of light transmitted by the variable wavelength interference filter 5.

The colorimetric sensor 3 includes, in a position opposed to the variable wavelength interference filter 5, an incident optical lens 33 configured to guide reflected light (inspection target light) reflected on the inspection target X to the inside of the colorimetric sensor 3. The incident optical lens 33 guides incident light to the optical filter device 600 at the angle of incidence θ. The colorimetric sensor 3 spectrally splits, with the variable wavelength interference filter 5 in the optical filter device 600, light having a predetermined wavelength in the inspection target light made incident from the incident optical lens 33 and receives the spectrally split light with the detecting section 31.

The detecting section 31 includes a plurality of photoelectric conversion elements and generates an electric signal corresponding to a light reception amount. The detecting section 31 is connected to the control device 4 via, for example, a circuit board 311. The detecting section 31 outputs the generated electric signal to the control device 4 as a light reception signal.

The outer side terminal sections 616 formed on the base outer side surface 613 of the base substrate 610 are connected to the circuit board 311. The outer side terminal sections 616 are connected to the voltage control section 32 via a circuit formed on the circuit board 311.

With such a configuration, it is possible to integrally configure the optical filter device 600 and the detecting section 31 via the circuit board 311. It is possible to simplify the configuration of the colorimetric sensor 3.

The voltage control section 32 is connected to the outer side terminal sections 616 of the optical filter device 600 via the circuit board 311. The voltage control section 32 applies a predetermined step voltage between the fixed electrode pad 563P and the movable electrode pad 564P on the basis of a control signal input from the control device 4 to drive the electrostatic actuator 56. Consequently, electrostatic attraction is generated in the inter-electrode gap G2 and the holding section 522 bends. Therefore, the movable section 521 is displaced to the fixed substrate 51 side. It is possible to set the inter-reflection film gap G1 to a desired dimension.

### 4. Configuration of the control device

The control device 4 controls the overall operation of the colorimetric apparatus 1.

As the control device 4, for example, a general-purpose personal computer, a portable information terminal, or a computer dedicated to colorimetry can be used.

The control device 4 includes, as shown in Fig. 7, a light-source control section 41, a colorimetric-sensor control section 42, and a colorimetric processing section 43.

The light-source control section 41 is connected to the light source device 2. The light-source control section 41 outputs a predetermined control signal to the light source device 2 on the basis of, for example, a setting input of a user and causes the light source device 2 to emit white light having predetermined brightness.

The colorimetric-sensor control section 42 is connected to the colorimetric sensor 3. The colorimetric-sensor control section 42 sets, on the basis of, for example, a setting input of the user, a wavelength of light received by the colorimetric sensor 3 and outputs a control signal for detecting a received light amount of the light having the wavelength to the colorimetric sensor 3. Consequently, the voltage control section 32 of the colorimetric sensor 3 sets, on the basis of the control signal, an applied voltage to the electrostatic actuator 56 to transmit only a wavelength of light desired by the user.

The colorimetric processing section 43 analyzes the chromaticity of the inspection target X from the received light amount detected by the detecting section 31.

### 5. Action and effects of the embodiment

The colorimetric apparatus 1 in this embodiment includes the optical filter device 600 in the first embodiment. As explained above, since incident light is guided from the incident optical lens 33 to the optical filter device 600 at the angle of incidence θ, it is possible to reduce stray light of the incident light Lp in the optical filter device 600 and improve spectral precision of the optical filter device 600. Therefore, in the colorimetric sensor 3, it is possible to detect, with the detecting section 31, light having a target wavelength extracted at high resolution and detect an accurate light amount with respect to light having a desired target wavelength. Consequently, the colorimetric apparatus 1 can carry out accurate color analysis of the inspection target X.

The detecting section 31 is provided to be opposed to the base substrate 610. The detecting section 31 and the outer side terminal sections 616 provided on the base outer side surface 613 of the base substrate 610 are connected to one circuit board 311. That is, since the base substrate 610 of the optical filter device 600 is arranged on a light emission side, the base substrate 610 can be arranged near the detecting section 31 configured to detect light emitted from the optical filter device 600. Therefore, since the detecting section 31 and the outer side terminal sections 616 are wired to the one circuit board 311, it is possible to simplify a wiring structure and reduce the number of substrates.

The voltage control section 32 may be arranged on the circuit board 311. In this case, it is possible to attain further simplification of the configuration.

### Other embodiments

The invention is not limited to the embodiments explained above. Modifications, improvements, and the like in a range in which the object of the invention can be attained are included in the invention.

For example, in the first embodiment, the surface on the opposite side of the surface of the lid-side glass substrate 640 on which the non-translucent member 642 is formed is directly joined to the lid outer side surface 623 of the lid 620. However, the invention is not limited to this.

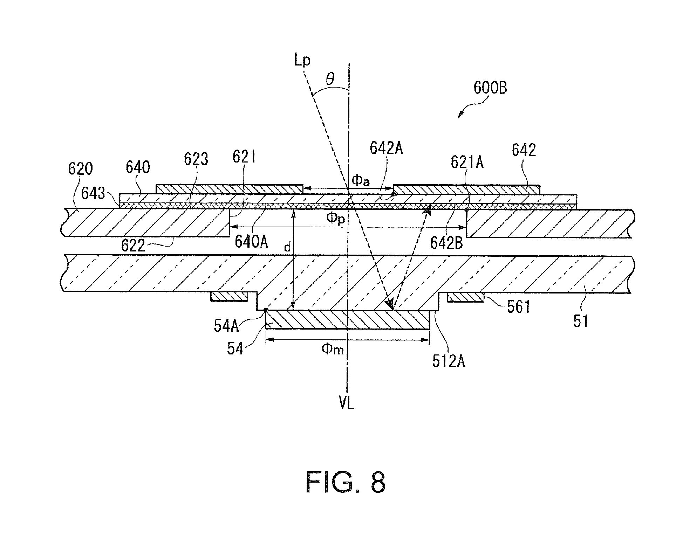

Fig. 8 is a partial sectional view showing an optical filter device 600B in a modification.

In the optical filter device 600B, a dielectric multilayer film 643 is formed on a surface 640A on the opposite side of the surface of the lid-side glass substrate 640 on which the non-translucent member 642 is formed. The lid-side glass substrate 640 is joined to the lid outer side surface 623 via the dielectric multilayer film 643.

The dielectric multilayer film 643 functions as a reflection preventing film and can suppress light made incident on the lid-side glass substrate 640 from the surface 640A side from being reflected on the surface 640A.

When the dielectric multilayer film 643 is not formed, about 4% of the light made incident on the lid-side glass substrate 640 from the surface 640A side is reflected on the surface 640A. Therefore, a part of light reflected on the surface 54B of the fixed reflection film 54 and passing through the light passage hole 621 is likely to be reflected on the surface 640A of the lid-side glass substrate 640 to change to stray light.

On the other hand, in the optical filter device 600B, the dielectric multilayer film 643 functioning as the reflection preventing film is formed on the surface 640A of the lid-side glass substrate 640. Therefore, it is possible to suppress the light reflected on the surface 54B of the fixed reflection film 54 and passing through the light passage hole 621 from being reflected on the surface 640A of the lid-side glass substrate 640 to change to stray light.

In an example shown in Fig. 8, the dielectric multilayer film 643, which is a multilayer reflection preventing film, is illustrated as the reflection preventing film. Besides, a single layer reflection preventing film of, for example, MgF₂ may be provided.

In the first embodiment, light is made incident from the light passage hole 621 of the lid 620. However, the invention is not limited to this. That is, light is made incident from the light passage hole 611 of the base substrate 610. In this case, the non-translucent member 642 is provided on the base-side glass substrate 630. When the diameter of the movable reflection film 55 is represented as Φm and the bore of the light passage hole 611 is represented as Φp, as in the first embodiment, the optical filter device 600B satisfies the relations Φa<Φm>Φp, (Φp-Φm)>2dtanθ, and (Φm-Φa)>2dtanθ.

In the first embodiment, the optical filter device 600 satisfies the relation (Φp-Φm)2dtanθ. However, the invention is not limited to this. In the first embodiment, the optical filter device 600 satisfies the relation (Φm-Φa)>2dtanθ. However, the invention is not limited to this. That is, the optical filter device 600 only has to satisfy at least the relation Φa<Φm>Φp.

In the first embodiment, the non-translucent member 642 is provided in the lid-side glass substrate 640. However, the invention is not limited to this. That is, it is also possible that the lid-side glass substrate 640 is not provided and the non-translucent member 642 is directly provided on the lid 620.

In the first embodiment, the non-translucent member 642 is provided on the surface on the opposite side of the surface of the lid-side glass substrate 640 opposed to the lid 620. However, the invention is not limited to this. That is, the non-translucent member 642 may be provided on the surface of the lid-side glass substrate 640 opposed to the lid 620.

In the first embodiment, the light reflectance of the surface 642B of the non-translucent member 642 is equal to or lower than 1%. However, the invention is not limited to this. That is, the light reflectance of the surface 642B of the non-translucent member 642 may be larger than 1% as long as the light reflectance does not affect, for example, a measurement error.

In the first embodiment, the optical filter device 600 satisfies the relation Φo<Φp. However, the invention is not limited to this. That is, the optical filter device 600 may satisfy a relation Φo≥Φp as long as emission of stray light can be sufficiently reduced.

In the first embodiment, the low-reflection chrome light blocking film is illustrated as the non-translucent member 642. However, the invention is not limited to this. That is, a low-reflection Si light blocking film or an absorbing film can also be used as the non-translucent member 642. Since the absorbing film absorbs light and converts the light into heat, when light is irradiated on the absorbing film, the absorbing film sometimes thermally expands and generate thermal stress. Therefore, when the absorbing film is used as the non-translucent member 642, it is preferable that, for example, the non-translucent member 642 is formed in a two-layer structure, a layer located on the opposite side of the light incident surface (a layer with a small light incident amount) is formed by the absorbing film, and a layer on the light incident surface side is formed of a light blocking film or a reflection film that does not transmit light.

In the example explained in the first embodiment, in the optical filter device 600, the variable wavelength interference filter 5 capable of changing the size of the inter-reflection film gap G1 with electrostatic attraction according to the application of a voltage to the fixed electrode 561 and the movable electrode 562 is housed. However, the invention is not limited to this. For example, as a gap changing section for changing the inter-reflection film gap G1, a dielectric actuator may be used in which a first dielectric coil is arranged instead of the fixed electrode 561 and a second dielectric coil or a permanent magnet is arranged instead of the movable electrode 562.

Further, a piezoelectric actuator may be used instead of the electrostatic actuator 56. In this case, for example, a lower electrode layer, a piezoelectric film, and an upper electrode layer are laminated and arranged on the holding section 522 and a voltage applied between the lower electrode layer and the upper electrode layer is varied as an input value. Consequently, it is possible to expand and contract the piezoelectric film to bend the holding section 522.

In the first embodiment, the variable wavelength interference filter 5 is illustrated as the interference filter housed in the internal space 650. However, for example, the interference filter may be an interference filter in which the size of the inter-reflection film gap G1 is fixed. In this case, it is unnecessary to form the holding section 522 for bending the movable section 521, the electrode arrangement groove 511 for providing the fixed electrode 561, and the like by etching. It is possible to simplify the configuration of the interference filter. Since the size of the inter-reflection film gap G1 is fixed, there is no problem of responsiveness. It is unnecessary to maintain the internal space 650 in a vacuum state. It is possible to attain simplification of the configuration and improvement of manufacturability. However, even in this case, for example, when the optical filter device 600 is used in a place where a temperature change is large, it is likely that the base-side glass substrate 630 and the lid-side glass substrate 640 receive stress and bend because of, for example, expansion of the air in the internal space 650. Therefore, even when the interference filter is used, it is preferable to maintain the internal space 650 in a vacuum or decompressed state.

In the first embodiment, the lid 620 includes the lid joining section 624, the sidewall section 625, and the top surface section 626. The top surface section 626 is parallel to the base substrate 610. However, the invention is not limited to this. The shape of the lid 620 may be any shape as long as the internal space 650 capable of housing the variable wavelength interference filter 5 can be formed between the lid 620 and the base substrate 610. For example, the top surface section 626 may be formed in a curved surface shape. However, in this case, manufacturing is considered to be complicated. For example, in order to maintain the internal space 650 airtight, it is necessary to form the lid-side glass substrate 640, which is joined to the lid 620, in a curved surface shape to match the lid 620 and form only a portion for closing the light passage hole 621 in a plane shape to prevent refraction or the like from occurring. Therefore, as in the first embodiment, it is preferable to use the lid 620, the top surface section 626 of which is parallel to the base substrate 610.

In the example explained in the first embodiment, the base-side glass substrate 630 and the lid-side glass substrate 640 are joined to the outer surface of the housing 601, that is, the base outer side surface 613 of the base substrate 610 and the lid outer side surface 623 of the lid 620. However, the invention is not limited to this. For example, the base-side glass substrate 630 and the lid-side glass substrate 640 may be joined to the internal space 650 side of the housing 601.

When a reflection type filter configured to reflect light multiply interfered by a first reflection film and a second reflection film is housed in the internal space 650 as the interference filter, the light passage hole 611 and the base-side glass substrate 630 do not have to be provided.

In this case, for example, a beam splitter is provided to be opposed to the light passage hole 621 of the optical filter device 600 to separate incident light on the optical filter device 600 and emitted light emitted from the optical filter device 600. Consequently, it is possible to detect the separated emitted light in the detecting section.

In the example explained in the first embodiment, the inner side terminal sections 615 and the outer side terminal sections 616 are connected to the through-holes 614 provided in the base substrate 610 via the conductive member. However, the invention is not limited to this. For example, bar-like terminals may be press-fit into the through-holes 614 of the base substrate 610 to connect distal ends of the terminals and the fixed electrode pad 563P, the movable electrode pad 564P, and the like.

In the first embodiment, as the electrode section of the invention provided in the variable wavelength interference filter 5, the fixed electrode 561 and the movable electrode 562 (the electrode pads 563P and 564P connected to the electrodes 561 and 562) configuring the electrostatic actuator are illustrated. However, the invention is not limited to this.

Other examples of the electrode of the invention include an electrostatic capacity detection electrode for measuring the size of the inter-reflection film gap G1 from a change in a charge retention amount of the fixed reflection film 54 and the movable reflection film 55 and a charge removal electrode for allowing charges stored in the substrates 51 and 52, the fixed reflection film 54, and the movable reflection film 55 to escape and removing a Coulomb force between the substrates. In this case, extraction electrodes extracted from the electrostatic capacity detection electrode, the charge removal electrode, and the like are arranged on the first electric surface 514 and the second electric surface 524. Even when such a plurality of electrodes are arranged, for example, by sticking the FPCs 615A to the first electric surface 514, it is possible to easily carry out wiring connection without carrying out connection work individually for the electrodes.

In the second embodiment, the colorimetric apparatus 1 is illustrated as the electronic apparatus according to the invention. Besides, the optical filter device, the optical module, and the electronic apparatus according to the invention can be used in various fields.

For example, the electronic apparatus can be used as a light-based system for detecting presence of a specific substance. Examples of the system include gas detecting apparatuses such as a vehicle-mounted gas leak detector that adopts a spectroscopic measurement system including the variable wavelength interference filter according to the invention and detects a specific gas at high sensitivity and a photoacoustic rare gas detector for a breath test.

An example of the gas detecting apparatuses is explained below with reference to the drawings.

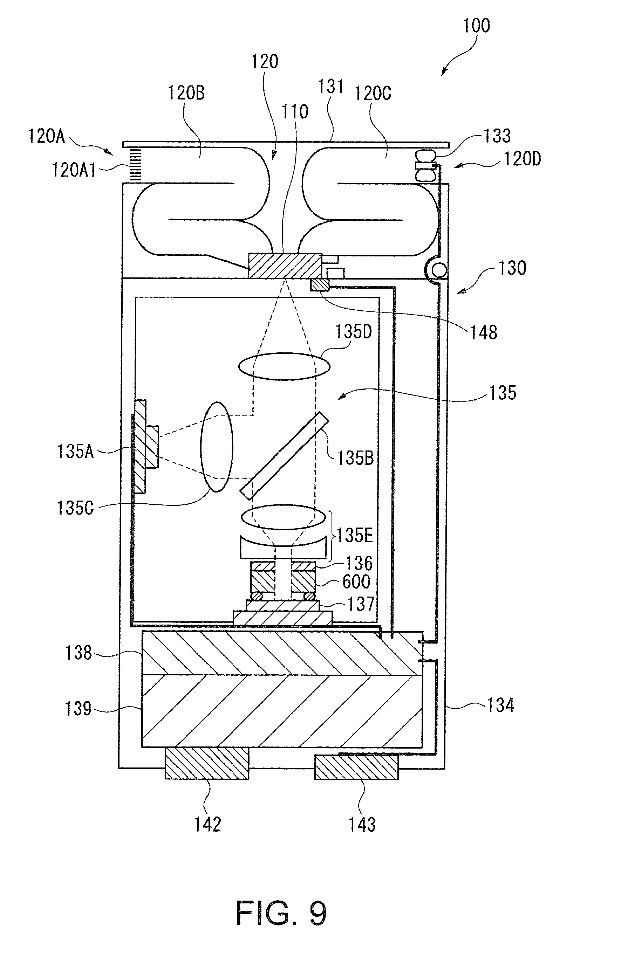

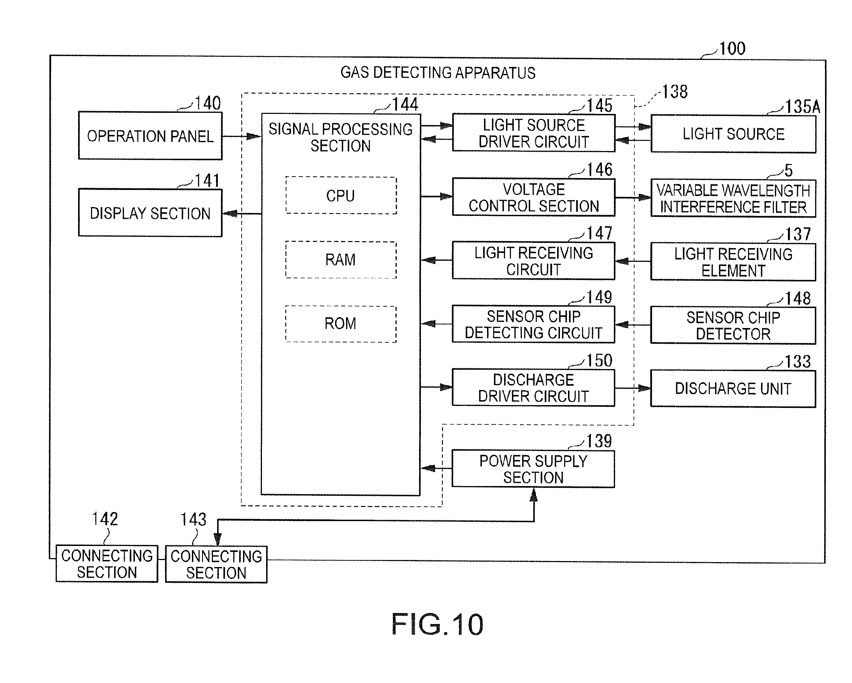

Fig. 9 is a schematic diagram showing an example of the gas detecting apparatus including the variable wavelength interference filter. Fig. 10 is a block diagram showing the configuration of a control system of the gas detecting apparatus shown in Fig. 9.

A gas detecting apparatus 100 includes, as shown in Fig. 9, a sensor chip 110, a channel 120 including a suction port 120A, a suction channel 120B, a discharge channel 120C, and a discharge port 120D, and a main body section 130.

The main body section 130 includes a detecting device including a sensor section cover 131 including an opening to which the channel 120 is detachably attachable, a discharge unit 133, a housing 134, an optical section 135, a filter 136, the optical filter device 600, and a light receiving element 137 (a detecting section), a control section 138 configured to process a detected signal and control the detecting section, and a power supply section 139 configured to supply electric power. The optical section 135 includes a light source 135A configured to emit light, a beam splitter 135B configured to reflect light made incident from the light source 135A to the sensor chip 110 side and transmit light made incident from the sensor chip 110 side to the light receiving element 137 side, and lenses 135C, 135D, and 135E.

As shown in Fig. 10, on the surface of the gas detecting apparatus 100, an operation panel 140, a display section 141, a connecting section 142 for interface with the outside, and the power supply section 139 are provided. When the power supply section 139 is a secondary battery, the gas detecting apparatus 100 may include a connecting section 143 for charging.

Further, the control section 138 of the gas detecting apparatus 100 includes, as shown in Fig. 10, a signal processing section 144 configured by a CPU or the like, a light source driver circuit 145 for controlling the light source 135A, a voltage control section 146 for controlling the variable wavelength interference filter 5 of the optical filter device 600, a light receiving circuit 147 configured to receive a signal from the light receiving element 137, a sensor chip detecting circuit 149 configured to receive a signal from a sensor chip detector 148 configured to read a code of the sensor chip 110 and detect presence or absence of the sensor chip 110, and a discharge driver circuit 150 configured to control the discharge unit 133.

The operation of the gas detecting apparatus 100 is explained below.

The sensor chip detector 148 is provided on the inside of the sensor section cover 131 in the upper part of the main body section 130. The sensor chip detector 148 detects presence or absence of the sensor chip 110. When the signal processing section 144 detects a detection signal from the sensor chip detector 148, the signal processing section 144 determines that the sensor chip 110 is mounted and outputs a display signal for causing the display section 141 to display the effect that a detection operation can be carried out.

For example, when the operation panel 140 is operated by a user and an instruction signal for instructing to start detection processing is output to the signal processing section 144 from the operation panel 140, first, the signal processing section 144 outputs a signal for light source actuation to the light source driver circuit 145 and actuates the light source 135A. When the light source 135A is actuated, laser light having a single wavelength and stable linear polarization is emitted from the light source 135A. A temperature sensor and a light amount sensor are incorporated in the light source 135A. Information of the temperature sensor and the light amount sensor is output to the signal processing section 144. When the signal processing section 144 determines on the basis of temperature and a light amount input from the light source 135A that the light source 135A is stably operating, the signal processing section 144 controls the discharge driver circuit 150 to actuate the discharge unit 133. Consequently, a gas sample including a target substance (gas molecules) to be detected is led from the suction port 120A to the suction channel 120B, the inside of the sensor chip 110, the discharge channel 120C, and the discharge port 120D. A dustproof filter 120A1 is provided in the suction port 120A. A part of relatively large powder dust, water vapor, and the like are removed.

The sensor chip 110 is a sensor in which a plurality of metal nanostructures are incorporated and localized surface Plasmon resonance is utilized. In the sensor chip 110, a reinforced magnetic field is formed among the metal nanostructures by laser light. When gas molecules enter the reinforced magnetic field, Raman scattering light and Rayleigh scattering light including information concerning molecule oscillation are generated.

The Rayleigh scattering light and the Raman scattering light are made incident on the filter 136 through the optical section 135. The Rayleigh scattering light is separated by the filter 136. The Raman scattering light is made incident on the optical filter device 600. The signal processing section 144 controls the voltage control section 146 to adjust a voltage applied to the variable wavelength interference filter 5 of the optical filter device 600 and causes the variable wavelength interference filter 5 of the optical filter device 600 to spectrally split the Raman scattering light corresponding to gas molecules to be detected. Thereafter, when the spectrally split light is received by the light receiving element 137, a light reception signal corresponding to a received light amount is output to the signal processing section 144 via the light receiving circuit 147.

The signal processing section 144 compares spectral data of the Raman scattering light corresponding to the gas molecules to be detected obtained as explained above and data stored in a ROM, determines whether the gas molecules are target molecules, and specifies a substance. The signal processing section 144 causes the display section 141 to display information concerning a result obtained by the signal processing section 144 and outputs the information to the outside from the connecting section 142.

In Figs. 9 and 10, the gas detecting apparatus 100 is illustrated that performs gas detection from the Raman scattering light obtained by spectrally splitting the Raman scattering light with the variable wavelength interference filter 5 of the optical filter device 600. However, as the gas detecting apparatus, a gas detecting apparatus may be used that detects absorbance peculiar to gas to specify a gas type. In this case, a gas sensor that feeds gas into a sensor and detects light absorbed by the gas in incident light is used as the optical module according to the invention. A gas detecting apparatus that analyzes and discriminates the gas fed into the sensor by the gas sensor is the electronic apparatus according to the invention. With such a configuration, it is also possible to detect components of the gas using the variable wavelength interference filter.

A system for detecting presence of a specific substance is not limited to the detection of the gas explained above. Examples of the system include substance component analyzing apparatuses such as a noninvasive measuring apparatus for measuring saccharides using a near infrared spectrum and a noninvasive measuring apparatus for measuring information concerning foods, organisms, minerals, and the like.

As an example of the substance component analyzing apparatuses, a food analyzing apparatus is explained.

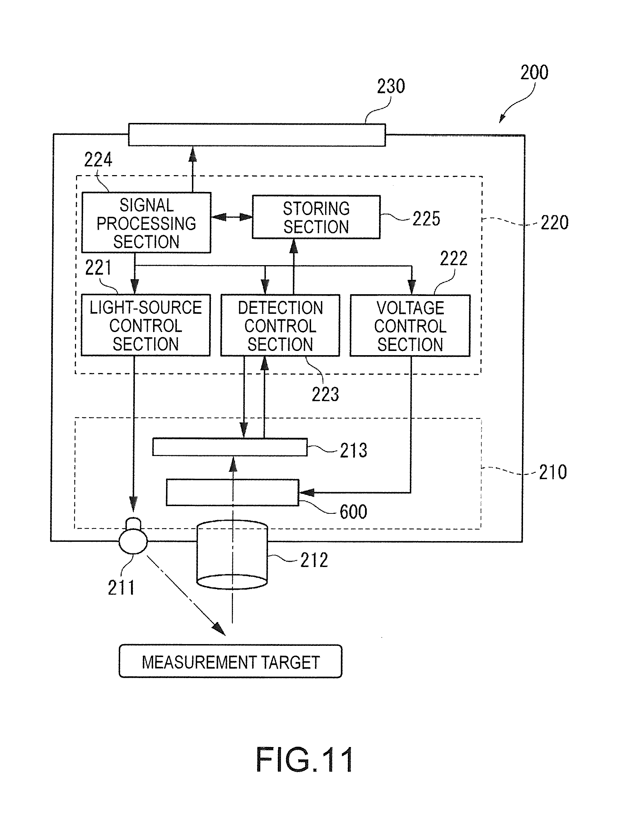

Fig. 11 is a diagram showing the schematic configuration of a food analyzing apparatus, which is an example of an electronic apparatus including the optical filter device 600.

A food analyzing apparatus 200 includes, as shown in Fig. 11, a detector 210 (an optical module), a control section 220, and a display section 230. The detector 210 includes a light source 211 configured to emit light, an image pickup lens 212 into which light from a measurement target is introduced, the optical filter device 600 configured to spectrally split the light introduced from the image pickup lens 212, and an image pickup section 213 (a detecting section) configured to detect the spectrally split light.

The control section 220 includes a light-source control section 221 configured to carry out lighting and extinction control for the light source 211 and brightness control during lighting, a voltage control section 222 configured to control the variable wavelength interference filter 5 of the optical filter device 600, a detection control section 223 configured to control the image pickup section 213 and acquire a spectral image picked up by the image pickup section 213, a signal processing section 224, and a storing section 225.

When the food analyzing apparatus 200 is driven, the light source 211 is controlled by the light-source control section 221 and light is irradiated on a measurement target from the light source 211. The light reflected on the measurement target is made incident on the optical filter device 600 through the image pickup lens 212. A voltage capable of spectrally splitting a desired wavelength is applied to the variable wavelength interference filter 5 of the optical filter device 600 according to the control by the voltage control section 222. An image of the spectrally split light is picked up by the image pickup section 213 configured by, for example, a CCD camera. The picked-up image of the light is stored in the storing section 225 as a spectral image. The signal processing section 224 controls the voltage control section 222 to change a voltage value applied to the variable wavelength interference filter 5 and acquires spectral images corresponding to wavelengths.

The signal processing section 224 subjects data of pixels in images accumulated in the storing section 225 to arithmetic processing and determines spectra in the pixels. For example, information concerning components of foods corresponding to spectra is stored in the storing section 225. The signal processing section 224 analyzes data of the determined spectra on the basis of the information concerning the foods stored in the storing section 225 and determines food components included in a detection target and contents of the food components. The signal processing section 224 can also determine food calories, freshness, and the like from the determined kinds and contents of the food components. Further, the signal processing section 224 can also carry out, for example, extraction of portions with deteriorated freshness in inspection target foods by analyzing a spectral distribution in an image. Furthermore, the signal processing section 224 can also carry out detection of foreign matters and the like included in foods.

The signal processing section 224 performs processing for causing the display section 230 to display information such as the components, the contents, the calories, and the freshness of the inspection target foods obtained as explained above.

In Fig. 11, the example of the food analyzing apparatus 200 is shown. However, with substantially the same configuration, the electronic apparatus can also be used as the noninvasive measuring apparatuses for the other information explained above. For example, the electronic apparatus can be used as an organism analyzing apparatus that performs analysis of organism components such as measurement and analysis of body fluid components of blood or the like. If the organism analyzing apparatus that measures body fluid components of blood or the like is an apparatus that detects ethyl alcohol, the organism analyzing apparatus can be used as a drunken driving preventing apparatus that detects a drunken state of a driver. The electronic apparatus can also be used as an electronic endoscope system including such an organism analyzing apparatus. Further, the electronic apparatus can also be used as mineral analyzing apparatus that carries out component analysis for minerals.

Further, the variable wavelength interference filter, the optical module, and the electronic apparatus according to the invention can be applied to apparatuses explained below.

For example, it is possible to transmit data with lights having various wavelengths by changing the intensities of the lights having the wavelengths with time. In this case, it is possible to extract data transmitted by light having a specific wavelength by spectrally splitting the light having the specific wavelength with the variable wavelength interference filter provided in the optical module and causing the light receiving section to receive the light. It is also possible to carry out optical communication by processing the data of the lights having the wavelengths with the electronic apparatus including the optical module for data extraction.

The electronic apparatus can also be applied to a spectroscopic camera that picks up a spectral image by spectrally splitting light with the variable wavelength interference filter according to the invention, a spectroscopic analyzer, and the like. Examples of the spectroscopic camera include an infrared camera incorporating the variable wavelength interference filter.

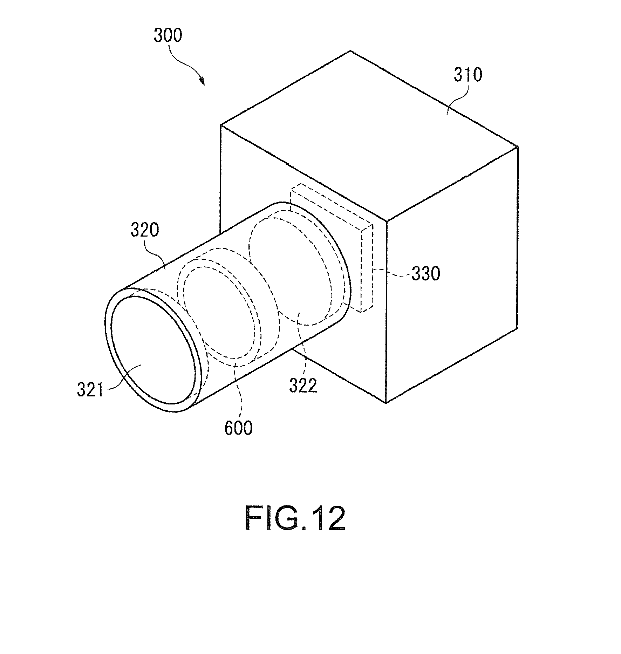

Fig. 12 is a schematic diagram showing the schematic configuration of the spectroscopic camera. A spectroscopic camera 300 includes, as shown in Fig. 12, a camera main body 310, an image pickup lens unit 320, and an image pickup section 330 (a detecting section).

The camera main body 310 is a portion gripped and operated by a user.

The image pickup lens unit 320 is provided in the camera main body 310 and guides incident image light to the image pickup section 300. The image pickup lens unit 320 includes, as shown in Fig. 12, an objective lens 321, an imaging lens 322, and the optical filter device 600 provided between the lenses.

The image pickup section 330 includes light receiving elements and pickups an image of image light guided by the image pickup lens unit 320.

The spectroscopic camera 300 can pick up a spectral image of light having a desired wavelength by transmitting light having an image pickup target wavelength with the variable wavelength interference filter 5 of the optical filter device 600.

Further, the variable wavelength interference filter according to the invention may be used as a band-pass filter. For example, the electronic apparatus can also be used as an optical laser apparatus that spectrally splits, with the variable wavelength interference filter, only light in a narrow band centering on a predetermined wavelength among lights in a predetermined wavelength region emitted by light emitting elements and transmits the light.

The variable wavelength interference filter according to the invention may be used in a biometric authentication apparatus. For example, the variable wavelength interference filter can also be applied to an authentication apparatus that authenticates a blood vessel, fingerprint, a retina, an iris, and the like using light in a near infrared region or a visible light region.

Further, the optical module and the electronic apparatus can be used as a concentration detecting apparatus. In this case, the concentration detecting apparatus spectrally splits and analyzes, with the variable wavelength interference filter, infrared energy (infrared light) emitted from a substance and measures subject concentration in a sample.

As explained above, the variable wavelength interference filter, the optical module, and the electronic apparatus according to the invention can be applied to any apparatus that spectrally splits predetermined light from incident light. As explained above, one variable wavelength interference filter according to the invention can spectrally split a plurality of wavelengths. Therefore, it is possible to accurately carry out measurement of spectra of the plurality of wavelengths and detection for a plurality of components. Therefore, compared with an apparatus in the past that extracts a desired wavelength with a plurality of devices, it is possible to promote a reduction in the sizes of the optical module and the electronic apparatus and suitably use the optical module and the electronic apparatus as, for example, a portable or vehicle-mounted optical device.

Besides, a specific structure in carrying out the invention can be changed to other structures and the like as appropriate in a range in which the object of the invention can be attained.

## Claims

1. An optical filter device comprising:
a housing including an incident light passage hole capable of making light incident on an inner side;
an aperture provided on an outer side of the housing and configured to limit the light made incident on the incident light passage hole; and
an interference filter provided on the inner side of the housing and including a first reflection film and a second reflection film opposed to the first reflection film, wherein
in plan view of the first reflection film and the second reflection film viewed from a film thickness direction, an opening of the aperture, the incident light passage hole, and the first and second reflection films are provided to overlap one another, and
when a diameter of the first reflection film close to the incident light passage hole is represented as Φm, a bore of the incident light passage hole is represented as Φp, and an opening diameter of the aperture is represented as Φa, the optical filter device satisfies a relation Φa<Φm<Φp.

2. The optical filter device according to claim 1, wherein center points in the plan view of the opening of the aperture, the incident light passage hole, the first reflection film, and the second reflection film are located on a same axis.

3. The optical filter device according to claim 1, wherein, when an angle of incidence of light made incident on the first reflection film from the incident light passage hole is represented as θ and a distance from the first reflection film to the aperture is represented as d, the optical filter device satisfies a relation (Φp-Φm)>2dtanθ.

4. The optical filter device according to claim 3, wherein the optical filter device satisfies a relation (Φm-Φa)>2dtanθ.

5. The optical filter device according to claim 1, wherein
a translucent substrate configured to cover the incident light passage hole is provided on the outer side of the housing, and
the aperture is provided in the translucent substrate.

6. The optical filter device according to claim 5, wherein a reflection preventing film is provided on a surface of the translucent substrate opposed to the first reflection film.

7. The optical filter device according to claim 1, wherein light reflectance of a surface of the aperture opposed to the first reflection film is equal to or lower than 1%.

8. The optical filter device according to claim 1, wherein
the housing is located on an opposite side of the incident light passage hole with respect to the first reflection film and the second reflection film and includes an emitted light passage hole overlapping the first reflection film and the second reflection film in plan view, and
when a bore of the emitted light passage hole is represented as Φo, the optical filter device satisfies a relation Φo<Φp.

9. An optical module comprising:
a housing including an incident light passage hole capable of making light incident on an inner side;
an aperture provided on an outer side of the housing and configured to limit the light made incident on the incident light passage hole;
an interference filter provided on the inner side of the housing and including a first reflection film and a second reflection film opposed to the first reflection film; and
a detecting section configured to detect light extracted by the interference filter, wherein
in plan view of the first reflection film and the second reflection film viewed from a film thickness direction, an opening of the aperture, the incident light passage hole, and the first and second reflection films are provided to overlap one another, and
when a diameter of the first reflection film close to the incident light passage hole is represented as Φm, a bore of the incident light passage hole is represented as Φp, and an opening diameter of the aperture is represented as Φa, the optical module satisfies a relation Φa<Φm<Φp.

10. An electronic apparatus comprising:
a housing including an incident light passage hole capable of making light incident on an inner side;
an aperture provided on an outer side of the housing and configured to limit the light made incident on the incident light passage hole;
an interference filter provided on the inner side of the housing and including a first reflection film and a second reflection film opposed to the first reflection film; and
a control section configured to control the interference filter, wherein
in plan view of the first reflection film and the second reflection film viewed from a film thickness direction, an opening of the aperture, the incident light passage hole, and the first and second reflection films are provided to overlap one another, and
when a diameter of the first reflection film close to the incident light passage hole is represented as Φm, a bore of the incident light passage hole is represented as Φp, and an opening diameter of the aperture is represented as Φa, the electronic apparatus satisfies a relation Φa<Φm<Φp.
